(19) Europäisches Patentamt
European Patent Office
Office européen des brevets

(11)  **EP 1 975 583 B1**

(12)  **EUROPÄISCHE PATENTSCHRIFT**

(45) Veröffentlichungstag und Bekanntmachung des Hinweises auf die Patenterteilung:
**14.11.2012   Patentblatt 2012/46**

(51) Int Cl.:
*G01K 17/10* (2006.01)       *G01K 19/00* (2006.01)
*F24D 19/10* (2006.01)

(21) Anmeldenummer: **08001988.8**

(22) Anmeldetag: **02.02.2008**

(54) **Energiezähler und Verfahren zur Erfassung einer Wärme- oder Kältemenge**

Energy measurer and process for determination of a warm or cold volume

Compteur d'énergie et procédé de détermination d'une quantité de chaleur ou de froid

(84) Benannte Vertragsstaaten:
**DE DK**

(30) Priorität: **28.03.2007   DE 102007014810**

(43) Veröffentlichungstag der Anmeldung:
**01.10.2008   Patentblatt 2008/40**

(73) Patentinhaber: **Landis+Gyr GmbH**
**90459 Nürnberg (DE)**

(72) Erfinder:
 • **Baumgärtner, Manfred**
**90766 Fürth (DE)**

 • **Müller-Grimm, Wolfgang**
**91074 Herzogenaurach (DE)**

(74) Vertreter: **Bauerschmidt, Peter et al**
**Rau, Schneck & Hübner**
**Patentanwälte**
**Königstrasse 2**
**90402 Nürnberg (DE)**

(56) Entgegenhaltungen:
**CH-A5- 667 328      DE-A1- 4 015 072**
**FR-A1- 2 860 871     US-A- 5 646 858**

**Beschreibung**

Die Erfindung betrifft einen Energiezähler sowie ein Verfahren zur Erfassung einer mittels eines Transportmediums an einen Verbraucher gelieferten Wärme- oder Kältemenge. Der Energiezähler umfasst eine Durchflussmesseinheit mit einer Betriebsdurchflussrichtung, einen ersten Temperatursensor für einen Vorlauf des Transportmediums, einen zweiten Temperatursensor für einen Rücklauf des Transportmediums und eine Steuer- und Auswerteeinheit, an die die Durchflussmesseinheit sowie der erste und der zweite Temperatursensor anschließbar sind. Bei dem Verfahren wird ein Volumenfluss des strömenden Transportmediums mittels einer eine Betriebsdurchflussrichtung aufweisenden Durchflussmesseinheit gemessen. Es werden eine Vorlauftemperatur und eine Rücklauftemperatur des Transportmediums gemessen. Weiterhin wird die Wärme- oder Kältemenge mittels einer Steuer- und Auswerteeinheit anhand des gemessenen Volumenflusses und der gemessenen Vor- und Rücklauftemperatur ermittelt.

Ein derartiger Energiezähler ist beispielsweise als Wärme- oder Kältezähler bekannt. Bei ihm handelt es sich um ein zulassungs- und eichpflichtiges Messgerät, das abrechenbare Energieverbrauchswerte ausschließlich unter bestimmungs-, also ordnungsgemäßen Einbaubedingungen ermittelt und abspeichert. Bei einem falschen Einbau des Energiezählers werden die ermittelten Messwerte verworfen, da sie nicht unter den für die Eichung zugrunde gelegten Bedingungen erfasst worden sind. Eine derartige Fehlmontage liegt beispielsweise dann vor, wenn die Durchflussmesseinheit entgegen ihrer Betriebsdurchflussrichtung eingebaut worden ist oder wenn die Temperatursensoren für den Vor- oder Rücklauf vertauscht worden sind.

Solche Montagefehler werden derzeit erst bei der ersten Ablesung, d. h. in der Regel nach einem Jahr, festgestellt. Da dann keine gespeicherten Energieverbrauchsangaben vorliegen, ist das abrechnende Unternehmen zu einer nur sehr ungenauen Schätzung gezwungen.

Eine Aufgabe der Erfindung besteht deshalb darin, einen Energiezähler der eingangs bezeichneten Art anzugeben, wie z.B. in der CH 667 328 A5 offenbart, mittels dessen auch bei einer Fehl-montage eine genauere Angabe des Energieverbrauchs möglich ist.

Zur Lösung dieser Aufgabe wird ein Energiezähler entsprechend den Merkmalen des Patentanspruchs 1 angegeben. Bei dem erfindungsgemäßen Energiezähler umfasst die Steuer- und Auswerteeinheit einen Datenhauptspeicher zur Hinterlegung ordnungsgemäß erfasster Wärme- oder Kältemengen sowie mindestens einen Datennebenspeicher zur Hinterlegung nicht ordnungsgemäß erfasster Wärme- oder Kältemengen.

Erkennt die Steuer- und Auswerteeinheit eine aktuelle Durchflussrichtung, die der bestimmungsgemäßen und der Eichung oder Kalibrierung zugrunde gelegten Betriebsdurchflussrichtung entgegengesetzt orientiert ist und insbesondere eine Temperaturdifferenz mit erwartetem Vorzeichen, werden die erfassten Wärme- oder Kältemengen im ersten Datennebenspeicher hinterlegt.

Bei dem erfindungsgemäßen Energiezähler wird also unterschieden, ob die Verbrauchsdaten ordnungsgemäß, d. h. insbesondere unter den der Eichung oder Kalibrierung zugrunde gelegten Bedingungen, erfasst und bestimmt worden sind oder nicht. Ordnungsgemäß ermittelte und somit ohne weiteres abrechenbare Wärme- oder Kältemengen werden im Datenhauptspeicher gespeichert, wohingegen im Fall einer erkannten Unregelmäßigkeit die dennoch erfassten Wärme- oder Kältemengen nun nicht mehr verworfen, sondern in mindestens einem Datennebenspeicher für eine Weiterverwendung gespeichert werden. Insbesondere können die im Datennebenspeicher gesammelten Daten für eine genauere Abschätzung des tatsächlichen Energieverbrauchs während des Abrechnungszeitraums verwendet werden. Ohne die erfindungsgemäß vorgesehene Datenspeicherung auch nicht ordnungsgemäß erfasster Verbrauchsdaten wird der Verbrauch bei einer Zählerfehlmontage gemäß den Allgemeinen Versorgungsbedingungen Fernwärme oder gemäß der Heizkostenverordnung geschätzt. Diese Schätzung ist oft nur sehr ungenau und übergeht die Variabilität des Verbrauchsverhaltens, zum Beispiel bei Änderung des Nutzungsverhaltens aufgrund eines Mieterwechsels, bei veränderter Bewohnerzahl, bei veränderter Raumverwendung, bei Umbau oder Renovierung. Unter Verwendung der im Datennebenspeicher hinterlegten Verbrauchswerte lässt sich diese bislang sehr ungenaue Abschätzung deutlich genauer und damit gerechter durchführen.

Bei dem erfindungsgemäß vorgesehenen Datennebenspeicher kann es sich um eine physikalisch gesonderte Speichereinheit oder auch um einen Teilbereich einer großen Speichereinheit, die außerdem auch den Datenhauptspeicher umfasst, handeln. Im zuletzt genannten Fall stellt der Datennebenspeicher eine logische Untereinheit der übergeordneten Speichereinheit dar.

Vorteilhafte Ausgestaltungen des erfindungsgemäßen Energiezählers ergeben sich aus den Merkmalen der von Anspruch 1 abhängigen Ansprüche. Günstig sind Varianten, bei denen bis zu drei verschiedene und zumindest logisch separat voneinander ausgebildete Datennebenspeicher vorhanden sind. Der jeweilige Datennebenspeicher ist dann zur Hinterlegung der bei jeweils einer anderen nicht ordnungsgemäßen Betriebsbedingung erfassten Wärme- oder Kältemengen bestimmt. Die Steuer- und Auswerteeinheit ist jeweils zur Überprüfung ordnungsgemäßer Einbau- und/oder Betriebsbedingungen ausgelegt.

Insbesondere ist die Steuer- und Auswerteeinheit zur Ermittlung einer Temperaturdifferenz zwischen einer vom ersten Temperatursensor erfassten Vorlauftemperatur und einer vom zweiten Temperatursensor erfassten Rücklauftemperatur ausgelegt. Weiterhin ist die Steuer- und Auswerteeinheit vorzugsweise zur Erkennung einer Durchflussrichtung des Transportmediums durch die Durchflussmesseinheit ausgelegt.

Erkennt die Steuer- und Auswerteeinheit eine Temperaturdifferenz mit unerwartetem Vorzeichen und insbesondere eine korrekte Durchflussrichtung durch die Durchflussmesseinheit, werden die erfassten Wärme- oder Kältemengen im zweiten Datennebenspeicher hinterlegt. Ein unerwartetes Vorzeichen ergibt sich insbesondere dann, wenn die Vorlauftemperatur im Wärmezählermodus niedriger ist als die Rücklauftemperatur oder im Kältezählermodus höher ist als die Rücklauftemperatur.

Werden sowohl eine Temperaturdifferenz mit unerwartetem Vorzeichen als auch eine falsch orientierte Durchflussrichtung erkannt, werden die erfassten Wärme- oder Kältemengen im dritten Datennebenspeicher abgelegt.

Diese Speicherung in unterschiedlichen Datennebenspeichern ist günstig. Die nachträgliche Schätzung des Energieverbrauchs lässt sich nämlich weiter verbessern, wenn die nicht ordnungsgemäß erfassten Verbrauchswerte in Abhängigkeit des jeweils erkannten Fehlers abgespeichert werden. Bei der Abschätzung können die dann jeweils geltenden Fehlergrenzen berücksichtigt werden.

Gemäß einer weiteren vorteilhaften Ausgestaltung ist die Steuer- und Auswerteeinheit dazu ausgelegt, eine im Datenhauptspeicher hinterlegte erste Wärmemenge, oder insbesondere den Datenumfang dieser ersten Wärmemenge, mit einer in mindestens einem Datennebenspeicher hinterlegten zweiten Wärmemenge, bzw. insbesondere mit dem Datenumfang dieser zweiten Wärmemenge, zu vergleichen. Weiterhin umfasst die Steuer- und Auswerteeinheit insbesondere Anzeigemittel zur Anzeige eines Hinweises, falls die erste Wärmemenge im Datenhauptspeicher kleiner als ist die zweite Wärmemenge im Datennebenspeicher. Die Anzeigemittel können vorzugsweise optisch und/oder akustisch ausgebildet sein. Vorzugsweise wird der Vergleich nach einem anfänglichen Vergleichszeitraum, beispielsweise von etwa 300 Betriebsstunden, durchgeführt, so dass über irrelevante Schwankungen hinweg gemittelt wird. Es kann nämlich auch bei korrektem Einbau aufgrund von Störungen im Kreislauf des Transportmediums zu Messwerten kommen, die die Bedingungen einer nicht ordnungsgemä-βen Messwerterfassung erfüllen. Diese Zustände dauern üblicherweise jedoch nur eine kurze Zeit an. Solche kurzzeitigen fehlerhaften Betriebsbedingungen der Heiz- oder Kühlanlage lassen sich anhand der Mittelwertbildung über den Vergleichszeitraum problemlos von einer Fehlmontage des Energiezählers unterscheiden. Der Vergleich der jeweiligen Wärmemengen im Datenhauptregister und im Datennebenregister wird insbesondere zyklisch fortgesetzt. Aufgrund der Anzeige kann frühzeitig, insbesondere vor dem Ende des ersten Abrechnungszeitraums erkannt werden, dass eine Fehlmontage vorliegt. Ein korrekter Einbau kann also deutlich früher veranlasst werden, so dass sich die Zeitspanne mit nur geschätzter Abrechnung reduziert.

Vorzugsweise ist die Steuer- und Auswerteeinheit außerdem dazu ausgelegt, eine Fehlerspanne für die im mindestens einen Datennebenspeicher hinterlegten Wärme- oder Kältemengen zu bestimmen. Da die nicht ordnungsgemäßen Einbau- oder Betriebsbedingungen bereits bekannt sind, können die hierzu jeweils maßgeblichen Fehlertoleranzen problemlos mit angegeben werden. Dies erleichtert die Abschätzung des Energieverbrauchs.

Eine weitere Aufgabe besteht darin, ein Verfahren der eingangs bezeichneten Art anzugeben, das auch bei einer Fehlmontage eine genauere Angabe des Energieverbrauchs ermöglicht.

Zur Lösung dieser Aufgabe wird ein Verfahren entsprechend den Merkmalen des Patentanspruchs 5 angegeben. Bei dem,erfindungsgemäßen Verfahren wird mittels der Steuer- und Auswerteeinheit überprüft, ob die Messwerterfassung ordnungsgemäß erfolgt ist. Bei ordnungsgemäßer Messwerterfassung wird die ermittelte Wärme- oder Kältemenge in einem Datenhauptspeicher abgespeichert, bei nicht ordnungsgemäßer Messwerterfassung dagegen in einem Datennebenspeicher.

Vorteilhafte Ausgestaltungen des erfindungsgemäßen Verfahrens ergeben sich aus den Merkmalen der von Anspruch 5 abhängigen Ansprüche. Das erfindungsgemäße Verfahren und seine Ausgestaltungen bieten im Wesentlichen die gleichen Vorteile, die bereits im Zusammenhang mit dem erfindungsgemäßen Energiezähler beschrieben worden sind.

Weitere Merkmale, Vorteile und Einzelheiten der Erfindung ergeben sich aus der nachfolgenden Beschreibung von Ausführungsbeispielen anhand der Zeichnung. Es zeigt:

Fig. 1 ein Blockschaltbild einer Steuer- und Auswerteeinheit eines Energiezählers mit einem Datenhauptspeicher und mehreren Datennebenspeichern,

Fig. 2 einen Energiezähler in korrekter Montage und

Fig. 3 bis 5 den Energiezähler gemäß Fig. 2 in jeweils anderer Fehlmontage.

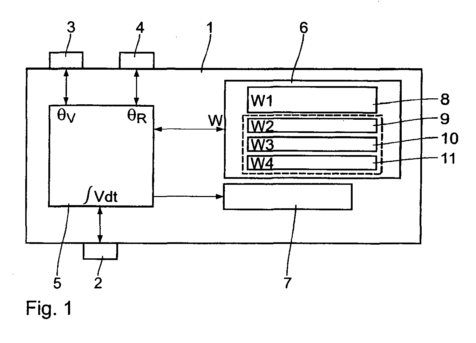

Einander entsprechende Teile sind in Fig. 1 bis 5 mit denselben Bezugszeichen versehen.

In Fig. 1 ist ein Ausführungsbeispiel einer Steuer- und Auswerteeinheit 1 eines in Fig. 1 nicht mit dargestellten Energiezählers gezeigt. Die Steuer- und Auswerteeinheit 1 umfasst mehrere Messanschlüsse, nämlich einen Volumenmessanschluss 2, einen Vorlauftemperaturmessanschluss 3 und einen Rücklauftemperaturmessanschluss 4. Diese Messanschlüsse 2 bis 4 sind mit einer zentralen Berechnungseinheit 5, beispielsweise in Form eines Mikroprozessors oder Mikrocontrollers, verbunden. Die Berechnungseinheit 5 ist außerdem an eine Speichereinheit 6 und an eine Anzeigeeinheit 7 angeschlossen.

Die Speichereinheit 6 umfasst mehrere Teilspeicher, nämlich einen Datenhauptspeicher 8 sowie drei Datennebenspeicher 9, 10 und 11. Der Datenhauptspeicher 8 dient zur Aufnahme ordnungsgemäß erfasster Energieverbrauchsdaten, die Datennebenspeicher 9 bis 11 dagegen zur Aufnahme nicht ordnungsgemäß erfasster Energieverbrauchsdaten.

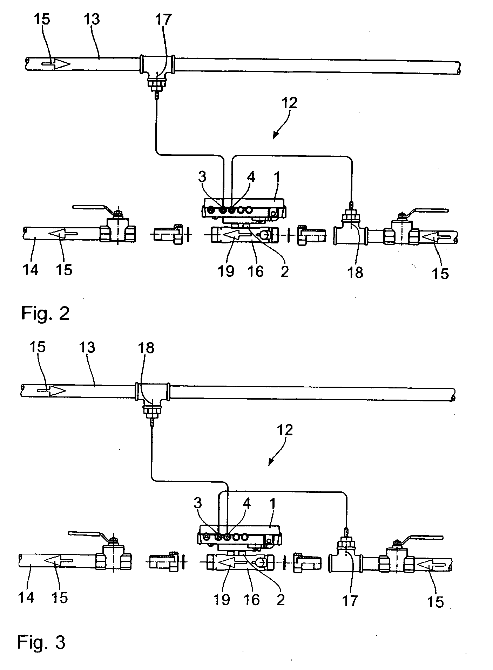

In Fig. 2 ist ein Ausführungsbeispiel eines ultraschallbasierten Wärmeenergiezählers 12 dargestellt, der die Steuer- und Auswerteeinheit 1 gemäß Fig. 1 enthält. Der Wärmeenergiezähler 12 ist in ein Heizungssystem eingebaut, von dem in Fig. 2 lediglich ein Vorlauf 13 und ein Rücklauf 14 dargestellt sind. Zwischen dem Vorlauf 13 und dem Rücklauf 14 befindet sich mindestens ein Verbraucher, beispielsweise in Form eines Heizkörpers oder einer Warmwasseranlage, der dem in dem Heizungssystem als Transportmedium strömenden Wasser Wärmeenergie entzieht. Der Wärmeenergiezähler 12 erfasst für Abrechnungszwecke die entnommene Wärmeenergiemenge. Das Wasser fließt innerhalb des Heizungssystems mit einer Wasserflussrichtung 15.

Der Wärmeenergiezähler 12 enthält neben der Steuer- und Auswerteeinheit 1 eine ultraschallbasierte Durchflussmesseinheit 16 sowie einen Vorlauftemperatursensor 17 und einen Rücklauftemperatursensor 18. Die Durchflussmesseinheit 16 hat eine Betriebsdurchflussrichtung 19, die im Rahmen einer Kalibrierung oder Eichung dieses Gerätetyps festgelegt wird.

Bei der in Fig. 2 dargestellten korrekten Montage des Wärmeenergiezählers 12 ist die Durchflussmesseinheit 16 mit ihrer Betriebsdurchflussrichtung 19 in Wasserflussrichtung 15 eingebaut. Außerdem ist der Vorlauftemperatursensors 17 im Vorlauft 13 und der Rücklauftemperatursensor 18 im Rücklauf 14 eingebaut.

In der zentralen Berechnungseinheit 5 der Steuer- und Auswerteeinheit 1 wird aus den Messwerten der Durchflussmesseinheit 16 sowie der Temperatursensoren 17 und 18 in an sich bekannter Weise eine Wärmemenge W entsprechend der Formel

$$W = k(\theta_v, \theta_R) \cdot (\theta_v - \theta_R) \cdot \int V dt$$

ermittelt, wobei $\theta_V$ eine vom Vorlauftemperatursensor 17 gemessene Vorlauftemperatur, $\theta_R$ eine vom Rücklauftemperatursensor 18 gemessene Rücklauftemperatur, V einen Volumenfluss, $\int V dt$ ein innerhalb eines bestimmten Messzeitintervalls, beispielsweise von einigen Sekunden, durch die Durchflussmesseinheit 16 durchgeflossenes Wasservolumen in $m^3$ und k einen von der Vorlauftemperatur $\theta_V$ und von der Rücklauftemperatur $\theta_R$ abhängigen Wärmekoeffizienten von Wasser in kWh $m^{-3}$ $K^{-1}$ bezeichnet. Eine so ermittelte Wärmemenge W wird in der Speichereinheit 6 als Energieverbrauchswert hinterlegt.

Die Steuer- und Auswerteeinheit 1 überprüft die Messwerte auf Plausibilität. Insbesondere werden die Vorzeichen des von der Durchflussmesseinheit 16 ermittelten Volumenflusses V und der Differenz zwischen der Vorlauftemperatur $\theta_V$ (typisch $\leq 60°C$) und der Rücklauftemperatur $\theta_R$ (typisch $\geq 40°C$) überprüft. Bei dem in Fig. 2 gezeigten korrekten Einbau des Wärmeenergiezählers 12 und bei auch ansonsten korrekten Betriebsbedingungen des Heizungssystems sind diese beiden Vorzeichen positiv. Dann befindet sich der Wärmeenergiezähler 12 in seiner Normalfunktion. In dieser Betriebsart werden erfasste Wärmemengen W als ordnungsgemäß erfasste Wärmemengen W1 in den Datenhauptspeicher 8 gespeichert.

Allerdings kann es aber auch bei korrektem Einbau zu einem negativen Volumenfluss V und/oder zu einer negativen Temperaturdifferenz ($\theta_V - \theta_R$) kommen. Ersteres ergibt sich beispielsweise beim Auftreten einer unerwünschten Druckdifferenz und eines daraus resultierenden Rückflusses des Wassers in Richtung eines anderen Kreislaufs. Ein solcher Rückfluss kann z.B. bei aktiver Lüftung und ausgeschaltetem Heizungssystem auftreten. Während eines solchen kurzzeitigen Rückwärtsflusses des Wassers können auch negative Temperaturdifferenzen auftreten. Die während dieses Betriebszustands erfassten Werte der Wärmemenge W entsprechen nicht den vorgegebenen Bedingungen für die Normalfunktion und werden deshalb nicht in den Datenhauptspeicher 8 mit aufgenommen. Sie werden aber dennoch nicht verworfen, sondern als nicht ordnungsgemäß erfasste Wärmemengen W2, W3 und W4 in einem der Datennebenspeicher 9 bis 11 gespeichert. Der Wärmeenergiezähler 12 befindet sich dann in einer Ausnahmefunktion.

Um zu unterscheiden, ob tatsächlich eine Fehlmontage oder nur eine kurzzeitige Betriebsstörung im Heizungssystem vorliegt, werden die über einen Vergleichszeitraum hinweg im Datenhauptspeicher 8 einerseits hinterlegten Wärmemengen W 1 und in den verschiedenen Datennebenspeichern 9 bis 11 andererseits hinterlegten Wärmemengen W2 bis W4 miteinander verglichen. Wird der Vergleichszeitraum lange genug gewählt, spielen kurzzeitige Betriebsstörungen keine wesentliche Rolle. Dann überwiegen die Wärmemengen W2 bis W4 in den Datennebenspeichern 9 bis 11 nur, wenn tatsächlich eine Fehlmontage gegeben ist.

In Fig. 3 bis 5 sind Beispiele für eine falsche Montage des Wärmeenergiezählers 12 dargestellt.

Bei der in Fig. 3 gezeigten Fehlmontage ist der Vorlauftemperatursensor 17 versehentlich im Rücklauf 14 und der Rücklauftemperatursensor 18 im

Vorlauf 13 eingebaut. Analog dazu wäre ein zwar korrekter Einbau der Temperatursensoren 17 und 18 im Vor- bzw. Rücklauf 13 bzw. 14, aber ein Vertauschen der Anschlüsse 3 und 4 an der Steuer- und Auswerteeinheit 1. In beiden Fällen hat die in der Steuer- und Auswerteeinheit 1 ermittelte Temperaturdifferenz ($\theta_V$ - $\theta_R$) ein negatives Vorzeichen. Der ebenfalls erfasste Volumenfluss V hat dagegen ein positives Vorzeichen. Daran wird erkannt, dass die während der Kalibrierung oder Eichung festgelegten Einbau- und/oder Betriebsbedingungen nur für die Durchflussmesseinheit 16, nicht jedoch für die Temperatursensoren 17 und 18 gegeben sind. Die so erfassten Wärmemengen W werden deshalb nicht im Datenhauptspeicher 8, sondern als nicht ordnungsgemäß erfasste Wärmemengen W2 im zweiten Datennebenspeicher 9 hinterlegt. Anhand des negativen Vorzeichens erkennt die Steuer- und Auswerteeinheit 1 außerdem, dass der Wärmeenergiezähler 12 nicht in der Normalfunktion, sondern in einer Ausnahmefunktion zu betreiben ist. Bestätigt sich dies nach Abschluss des Vergleichszeitraums, der beispielsweise die ersten 300 Betriebsstunden umfasst, wird ein entsprechender Warnhinweis auf der Anzeigeeinheit 7 dargestellt. Der Benutzer kann dann eine richtige Montage des Wärmeenergiezählers 12 veranlassen.

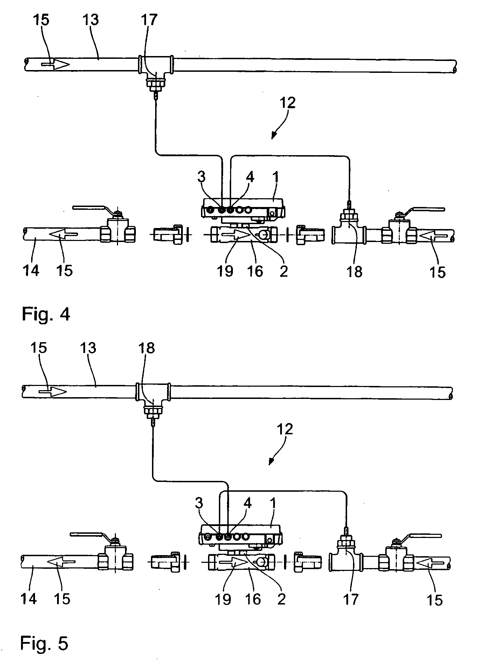

Bei der in Fig. 4 gezeigten Fehlmontage ist die Durchflussmesseinheit 16 mit ihrer Betriebsdurchflussrichtung 19 entgegen der Wasserflussrichtung 15 eingebaut. Dies führt zu einem negativen Volumenfluss V. Die Temperatursensoren 17 und 18 sind dagegen korrekt montiert, so dass eine positive Temperaturdifferenz ($\theta_V$ - $\theta_R$) resultiert. Beide Vorzeichen werden von der Steuer- und Auswerteeinheit 1 erkannt. Aufgrund der Unregelmäßigkeit beim detektierten Volumenfluss V wird wieder in eine Ausnahmefunktion umgeschaltet. Die in diesem Betriebsmodus erfassten Wärmemengen W werden dann als nicht ordnungsgemäß erfasste Wärmemengen W3 in dem ersten Datennebenspeicher 10 hinterlegt.

Bei der in Fig. 5 gezeigten Fehlmontage sind sowohl die Temperatursensoren 17 und 18 als auch die Durchflussmesseinheit 16 falsch eingebaut. Dadurch haben der Volumenfluss V und die Temperaturdifferenz ($\theta_V$ - $\theta_R$) jeweils negative Vorzeichen. Der Wärmeenergiezähler 12 wird dann wieder in einer Ausnahmefunktion betrieben, bei der die erfassten Wärmemengen W als nicht ordnungsgemäß erfasste Wärmemengen W4 in den dritten Datennebenspeicher 11 geschrieben werden.

Je nach dem, welche Art der Fehlmontage vorliegt, sind die erfassten und abgespeicherten Wärmemengen W2 bis W4 mit verschiedenen Fehlern behaftet. Bei einer ausschließlich negativen Temperaturdifferenz ($\theta_V$ - $\theta_R$) aufgrund eines Vertauschens der Temperatursensoren 17 und 18 resultiert ein zusätzlicher Fehler von typischerweise etwa 0,9 %. Er resultiert im Wesentlichen aus der Temperaturabhängigkeit des Wärmekoeffizienten k. Bei einem ausschließlich falsch orientierten Einbau der Durchflussmesseinheit 16 bewegt sich der zusätzliche Fehler für die erfassten Wärmemengen W3 z.B. in einem Bereich von +/- 5 %. Liegen beide Montagefehler vor, addieren sich die vorstehend für die negative Temperaturdifferenz ($\theta_V$ - $\theta_R$) und für den negativen Volumenfluss V jeweils genannten maximalen Teilfehler zu dem dann maßgeblichen kumulativen zusätzlichen Fehler.

Aufgrund dieser jeweils unterschiedlichen Fehlerbetrachtung ist es günstig, die während des Betriebs in der jeweiligen Ausnahmefunktion erfassten Wärmemengen W2 bis W4 je nach erkannter Ursache in einem anderen der Datennebenspeicher 9 bis 11 zu hinterlegen. So kann der jeweils maßgebliche Zusatzfehler bei der Abschätzung des abzurechnenden Energieverbrauchs aus den in den Datennebenspeichern 9 bis 11 hinterlegten Wärmemengen W2 bis W4 berücksichtigt werden. Die Abschätzung wird so genauer.

Die Speicherung der bei negativer Temperaturdifferenz ($\theta_V$ - $\theta_R$) oder/und bei negativen Volumenfluss V ermittelten Wärmemengen W2 bis W4 ist eine vorteilhafte Zusatzfunktion, die die geeichte oder kalibrierte Hauptfunktion des Wärmeenergiezählers 12 vollkommen unberührt lässt. Im normalen Betriebsmodus werden nach wie vor die vorschriftsmäßig erfassten Wärmemengen W 1 als unmittelbar abrechnungsfähige Verbrauchswerte gespeichert. Der Wärmeenergiezähler 12 bietet aber die zusätzliche Eigenschaft, dass bei einer Fehlmontage anhand der während einer der Ausnahmefunktionen gespeicherten Daten eine deutlich genauere Verbrauchsabschätzung erfolgen kann. Die in den Datenspeichern 9 bis 12 hinterlegten Daten können zu Abrechnungszwecken ohne weiteres ausgelesen werden.

Anhand von Fig. 1 bis 5 sind beispielhaft Aufbau und Funktionsweise eines Wärmeenergiezählers erläutert worden. Dies lässt sich analog auf einen Kälteenergiezähler übertragen. Der wesentliche Unterschied besteht lediglich in der Umkehr der Temperaturverhältnisse. Es können also vertauschte Vor- und Rücklauftemperaturanschlüsse 3 bzw. 4 vorgesehen werden. Alternativ kann aber auch nur das in der Steuer- und Auswerteeinheit 1 für einen korrekten Einbau erwartete Vorzeichen der Temperaturdifferenz ($\theta_V$ - $\theta_R$) geändert werden. Ebenso ist ein kombinierter Wärme-/Kälteenergiezähler möglich, der z.B. im Winterhalbjahr den Wärmeverbrauch und im Sommerhalbjahr den Kälteverbrauch einer angeschlossenen kombinierten Heizungs-/Klimaanlage erfasst. Die veränderten Temperaturverhältnisse im Transportmedium Wasser können dabei entweder von Hand oder auch automatisch umgestellt werden.

**Patentansprüche**

1. Energiezähler zur Erfassung einer mittels eines Transportmediums an einen Verbraucher gelieferten Wärme- oder Kältemenge (W) umfassend

    a) eine Durchflussmesseinheit (16) mit einer Betriebsdurchflussrichtung (19), einen ersten Temperatursensor (17) für einen Vorlauf (13) des Transportmediums, einen zweiten Temperatursensor (18) für einen Rücklauf (14) des Transportmediums und eine Steuer- und Auswerteeinheit (1), an die die Durchflussmesseinheit (16) sowie der erste und der zweite Temperatursensor (17, 18) anschließbar sind, **dadurch gekennzeichnet, dass**
b) die Steuer- und Auswerteeinheit (1) einen Datenhauptspeicher (8) zur Hinterlegung ordnungsgemäß erfasster Wärme- oder Kältemengen (W1) sowie mindestens einen Datennebenspeicher (9, 10, 11) zur Hinterlegung nicht ordnungsgemäß erfasster Wärme- oder Kältemengen (W2, W3, W4) umfasst, und dass
c) die Steuer- und Auswerteeinheit (1) zur Erkennung einer Durchflussrichtung (15) des Transportmediums durch die Durchflussmesseinheit (16) ausgelegt ist und einen ersten Datennebenspeicher (10) zur Hinterlegung der bei einer Durchflussrichtung (15) entgegen der Betriebsdurchflussrichtung (19) erfassten Wärme- oder Kältemengen (W3) umfasst.

2. Energiezähler nach Anspruch 1, **dadurch gekennzeichnet, dass** die Steuer- und Auswerteeinheit (1) zur Ermittlung einer Temperaturdifferenz ($\theta_V$ - $\theta_R$) zwischen einer vom ersten Temperatursensor (17) erfassten Vorlauftemperatur ($\theta_V$) und einer vom zweiten Temperatursensor (18) erfassten Rücklauftemperatur ($\theta_R$) ausgelegt ist und einen zweiten Datennebenspeicher (9) zur Hinterlegung der bei einer Temperaturdifferenz ($\theta_V$ - $\theta_R$) mit unerwartetem Vorzeichen erfassten Wärme- oder Kältemengen (W2) sowie einen dritten Datennebenspeicher (11) zur Hinterlegung der bei einer Temperaturdifferenz ($\theta_V$ - $\theta_R$) mit unerwartetem Vorzeichen und bei einer Durchflussrichtung (15) entgegen der Betriebsdurchflussrichtung (19) erfassten Wärme- oder Kältemengen (W4) umfasst.

3. Energiezähler nach Anspruch 1, **dadurch gekennzeichnet, dass** die Steuer- und Auswerteeinheit (1) zu einem Vergleich einer im Datenhauptspeicher (8) hinterlegten ersten Wärmemenge (W1) und einer im mindestens einen Datennebenspeicher (9, 10, 11) hinterlegten zweiten Wärmemenge (W2, W3, W4) ausgelegt ist und die Steuer- und Auswerteeinheit (1) Anzeigemittel (7) insbesondere zur Anzeige eines Hinweises umfasst, falls die erste Wärmemenge (W1) kleiner ist als die zweite Wärmemenge (W2, W3, W4).

4. Energiezähler nach Anspruch 1, **dadurch gekennzeichnet, dass** die Steuer- und Auswerteeinheit (1) zur Bestimmung einer Fehlerspanne für die im mindestens einen Datennebenspeicher (9, 10, 11) hinterlegten Wärme- oder Kältemengen (W2, W3, W4) ausgelegt ist.

5. Verfahren zur Erfassung einer mittels eines Transportmediums an einen Verbraucher gelieferten Wärme- oder Kältemenge (W), bei dem

a) ein Volumenfluss (V) des strömenden Transportmediums mittels einer eine Betriebsdurchflussrichtung (19) aufweisenden Durchflussmesseinheit (16) gemessen wird,
b) eine Vorlauftemperatur ($\theta_V$) und eine Rücklauftemperatur ($\theta_R$) des Transportmediums gemessen werden,
c) die Wärme- oder Kältemenge (W) mittels einer Steuer- und Auswerteeinheit (1) anhand des gemessenen Volumenflusses (V) und der gemessenen Vor- und Rücklauftemperatur ($\theta_V$, $\theta_R$) ermittelt wird,
d) mittels der Steuer- und Auswerteeinheit (1) überprüft wird, ob die Messwerterfassung ordnungsgemäß erfolgt ist,
e) die ermittelte Wärme- oder Kältemenge (W1) bei ordnungsgemä-βer Messwerterfassung in einem Datenhauptspeicher (8) gespeichert wird, **dadurch gekennzeichnet, dass**
f) die ermittelte Wärme- oder Kältemenge (W2, W3, W4) bei nicht ordnungsgemäßer Messwerterfassung in einem Datennebenspeicher (9, 10, 11) gespeichert wird, und dass
g) eine Durchflussrichtung (15) des Transportmediums durch die Durchflussmesseinheit (16) ermittelt wird und die ermittelte Wärme- oder Kältemenge (W3) in einem ersten Datennebenspeicher (10) gespeichert wird, falls die ermittelte Durchflussrichtung (15) nicht gleich der Betriebsdurchflussrichtung (19) ist.

6. Verfahren nach Anspruch 5, **dadurch gekennzeichnet, dass** eine Temperaturdifferenz ($\theta_V$ - $\theta_R$) zwischen der Vorlauftemperatur ($\theta_V$) und der Rücklauftemperatur ($\theta_R$) ermittelt wird und die ermittelte Wärme- oder Kältemenge (W2) in einem zweiten Datennebenspeicher (9) gespeichert wird, falls die ermittelte Temperaturdifferenz ($\theta_V$ - $\theta_R$) ein unerwartetes Vorzeichen hat, sowie die ermittelte Wärme- oder Kältemenge (W4) in einem dritten Datennebenspeicher (11) gespeichert wird, falls die ermittelte Temperaturdifferenz ($\theta_V$ - $\theta_R$) ein unerwartetes Vorzeichen hat und die ermittelte Durchflussrichtung (15) nicht gleich der Betriebsdurchflussrichtung (19) ist.

7. Verfahren nach Anspruch 5, **dadurch gekennzeichnet, dass** eine im Datenhauptspeicher (8) gespeicherte erste Wärmemenge (W1) mit einer im mindestens einen Datennebenspeicher (9, 10, 11) gespeicherten zweiten Wärmemenge (W2, W3, W4) verglichen wird und insbesondere eine Anzeige erfolgt, falls die erste Wärmemenge (W1) kleiner ist als die zweite Wärmemenge (W2, W3, W4).

**8.** Verfahren nach Anspruch 5, **dadurch gekennzeichnet, dass** eine Fehlerspanne für die im mindestens einen Datennebenspeicher (9, 10, 11) gespeicherten Wärme- oder Kältemengen (W2, W3, W4) ermittelt wird.

**Claims**

**1.** Energy meter for determining a hot or cold volume (W) supplied by a transport medium to a consumer unit comprising

a) a flow measuring unit (16) with an operating flow direction (19), a first temperature sensor (17) for an advance flow (13) of the transport medium, a second temperature sensor (18) for a backward flow (14) of the transport medium and a control and evaluation unit (1), to which the flow measuring unit (16) and the first and the second temperature sensor (17, 18) can be connected, **characterised in that**
b) the control and evaluation unit (1) comprises a main data memory (8) for saving correctly determined hot or cold volumes (W1) and at least one secondary data memory (9, 10) for storing incorrectly determined hot or cold volumes (W2, W3, W4) and **in that**
c) the control and evaluation unit (1) is configured to identify a flow direction (15) of the transport medium through the flow measuring unit (16) and comprises a first secondary data memory (10) for storing the hot or cold volumes (W3) detected in a flow direction (15) that is opposite the operating flow direction (19).

**2.** Energy meter according to claim 1, **characterised in that** the control and evaluation unit (1) is configured to determine a temperature difference $(\theta_V-\theta_R)$ between an advance flow temperature $(\theta_V)$ detected by the first temperature sensor (17) and a backward flow temperature $(\theta_R)$ determined by the second temperature sensor (18) and comprises a second secondary data memory (9) for saving the hot or cold volumes (W2) determined at a temperature difference $(\theta_V-\theta_R)$ with an unexpected sign, as well as a third secondary data memory (11) for saving hot or cold volumes (W4) detected at a temperature difference $(\theta_V-\theta_R)$ with an unexpected sign and in a flow direction (15) that is opposite the operating flow direction (19).

**3.** Energy meter according to claim 1, **characterised in that** the control and evaluation unit (1) is configured to compare a first hot volume (W1) saved in the main data memory (8) and a second hot volume (W2, W3, W4) saved in at least one secondary data memory (9, 10,11), and the control and evaluation unit (1) comprises display means (7) in particular for displaying a signal, in case the first hot volume (W1) is smaller than the second hot volume (W2, W3, W4).

**4.** Energy meter according to claim 1, **characterised in that** the control and evaluation unit (1) is configured for determining a margin of error for the hot or cold volumes (W2, W3, W4) saved in at least one secondary data memory (9, 10, 11).

**5.** Method for determining a hot or cold volume (W) supplied by means of a transport medium to a consumer unit, in which

a) a volume flow (V) of the flowing transport medium is measured by means of flow measuring unit (16) comprising an operating flow direction (19),
b) an advance flow temperature $(\theta_V)$ and a backward flow temperature $(\theta_R)$ of the transport medium are measured,
c) the hot or cold volume (W) is determined by means of a control and evaluation unit (1) by way of the measured volume flow (V) and the measured advance and backward flow temperature $(\theta_V-\theta_R)$,
d) the control and evaluation unit (1) checks whether the measurement value has been determined correctly,
e) the determined hot or cold volume (W1) is saved in a main data memory (8) if the measurement value has been determined correctly, **characterised in that**
f) the determined hot or cold volume (W2, W3, W4) is saved in a secondary data memory (9, 10,11) if the measurement value has not been determined correctly and **in that**
g) a flow direction (15) of the transport medium is determined by the flow measuring unit (16) and the determined hot or cold volume (W3) is saved in a first secondary data memory (10) if the determined flow direction (15) is not the same as the operating flow direction (19).

**6.** Method according to claim 5, **characterised in that** a temperature difference $(\theta_V-\theta_R)$ between the advance flow temperature $(\theta_V)$ and the backward flow temperature $(\theta_R)$ is determined and the determined hot or cold volume (W2) is saved in a second secondary data memory (9) if the determined difference in temperature $(\theta_V-\theta_R)$ has an unexpected sign, and the determined hot or cold volume (W4) is saved in a third secondary data memory (11) if the determined difference in temperature $(\theta_V-\theta_R)$ has an unexpected sign and the determined flow direction (15) is not the same as the operating flow direction (19).

**7.** Method according to claim 5, **characterised in that** a first hot volume (W1) saved in the main data memory (8) is compared with a second hot volume (W2, W3, W4) saved in at least one secondary data memory (9, 10, 11) and in particular a signal is made if the first hot volume (W1) is smaller than the second hot volume (W2, W3, W4).

8. Method according to claim 5, **characterised in that** a margin of error is determined for the hot or cold volumes (W2, W3, W4) saved in at least one secondary data memory (9, 10, 11).

**Revendications**

1. Compteur d'énergie pour la détermination d'une quantité de chaleur ou de froid (W) délivrée à un utilisateur comprenant

   a) une unité de mesure du débit (16) comportant un sens de passage de fonctionnement (19), un premier capteur de température (17) pour un circuit aller (13) du milieu de transport, un second capteur de température (18) pour un circuit retour (14) du milieu de transport et une unité de commande et d'évaluation (1) à laquelle l'unité de mesure du débit (16) ainsi que le premier et le second capteurs de température (17, 18) peuvent être branchés, **caractérisé en ce que**
   b) l'unité de commande et d'évaluation (1) comprend un enregistreur principal de données (8) pour la consignation réglementaire des quantités de chaleur ou de froid (W1) déterminées ainsi qu'au moins un enregistreur secondaire de données (9, 10, 11) pour la consignation des quantités de chaleur ou de froid (W2, W3, W4) non réglementaires, et que
   c) l'unité de commande et d'évaluation (1) est mise à disposition pour la reconnaissance d'un sens de passage (15) du milieu de transport à travers l'unité de mesure du débit (16) et un premier enregistreur secondaire de données (10) pour la consignation d'une quantité de chaleur ou de froid (W3) pour un sens de passage (15) opposé au sens de passage de fonctionnement (19).

2. Compteur d'énergie selon la revendication 1 **caractérisé en ce que** l'unité de commande et d'évaluation (1) est mise à disposition pour la détermination d'une différence de températures ($\theta_V$ - $\theta_R$) entre une température du circuit aller ($\theta_V$) évaluée par le premier capteur de température (17) et une température du circuit retour ($\theta_R$) évaluée par le second capteur de température (18), et un deuxième enregistreur secondaire de données (9) pour la consignation des quantités de chaleur ou de froid (W2) avec un signe non attendu pour une différence de températures

($\theta_V$ - $\theta_R$), ainsi qu'un troisième enregistreur secondaire de données (11) pour la consignation des quantités de chaleur ou de froid (W4) évaluées pour une différence de températures ($\theta_V$ - $\theta_R$) avec un signe non attendu dans un sens de passage (15) opposé au sens de passage de fonctionnement (19).

3. Compteur d'énergie selon la revendication 1 **caractérisé en ce que** l'unité de commande et d'évaluation (1) est prévue faire une comparaison d'une première quantité de chaleur (W1) consignée dans l'enregistreur principal de données (8) avec au moins une deuxième quantité de chaleur (W2, W3, W4) consignée dans un enregistreur secondaire de données (9, 10, 11) et l'unité de commande et d'évaluation (1) comprend des moyens d'affichage (7), en particulier pour l'affichage d'une information dans le cas où la première quantité de chaleur (W1) est inférieure à la deuxième quantité de chaleur (W2, W3, W4).

4. Compteur d'énergie selon la revendication 1 **caractérisé en ce que** l'unité de commande et d'évaluation (1) est conçue pour la détermination d'une marge d'erreur pour les quantités de chaleur ou de froid (W2, W3, W4) consignées dans au moins un enregistreur secondaire de données (9, 10, 11).

5. Procédé pour la détermination d'une quantité de chaleur ou de froid (W) délivrée à un utilisateur au moyen d'un milieu de transport, dans lequel

   a) un débit volumique (V) du milieu de transport s'écoulant est mesuré au moyen d'une unité de mesure de débit (16) indiquant un sens de passage de fonctionnement (19),
   b) une température de circuit aller ($\theta_V$) et une température du circuit retour ($\theta_R$) du milieu de transport sont mesurées,
   c) la quantité de chaleur ou de froid (W) est déterminée au moyen d'une unité de commande et d'évaluation (1) en se basant sur le débit volumique (V) mesuré et la température du circuit aller et la température du circuit retour ($\theta_V$, $\theta_R$) mesurées,
   d) on vérifie si la détermination des valeurs de mesure se déroule de manière réglementaire au moyen de l'unité de commande et d'évaluation (1),
   e) la quantité de chaleur ou de froid (W1) déterminée est enregistrée avec une détermination des valeurs de mesure réglementaire dans un enregistreur principal de données (8), **caractérisé en ce**
   f) **que** la quantité de chaleur ou de froid déterminée (W2, W3, W4) dans une évaluation des valeurs de mesure non réglementaire est enregistrée dans un enregistreur secondaire de données (9, 10, 11), et

g) **qu'**un sens de passage (15) du milieu de transport est évalué par l'unité de mesure du débit (16) et que la quantité de chaleur ou de froid déterminée (W3) est enregistrée dans un premier enregistreur secondaire de données (10) dans le cas où le sens de passage déterminé (15) n'est pas égal au sens de passage de fonctionnement (19).

6. Procédé selon la revendication 5 **caractérisé en ce que** la différence de température ($\theta_V - \theta_R$) entre la température du circuit aller ($\theta_V$) et la température du circuit retour ($\theta_R$) est déterminée, et que la quantité de chaleur ou de froid déterminée (W2) est enregistrée dans un deuxième enregistreur secondaire de données (9) lorsque la différence de températures ($\theta_V - \theta_R$) déterminée possède un signe non prévu, de même, la quantité de chaleur ou de froid déterminée (W4) est enregistrée dans un troisième enregistreur secondaire de données (11) lorsque la différence de températures ($\theta_V - \theta_R$) déterminée possède un signe non prévu et lorsque le sens de passage déterminé (15) n'est pas égal au sens de passage de fonctionnement (19).

7. Procédé selon la revendication 5 **caractérisé en ce qu'**une première quantité de chaleur (W1) enregistrée dans l'enregistreur principal de données (8) est comparée à au moins une seconde quantité de chaleur enregistrée (W2, W3, W4) consignée dans un enregistreur secondaire de données (9, 10, 11) et, en particulier, une information s'affiche si la première quantité de chaleur (W1) est inférieure à la seconde quantité de chaleur (W2, W3, W4).

8. Procédé selon la revendication 5 **caractérisé en ce qu'**une marge d'erreur est déterminée pour les quantités de chaleur ou de froid (W2, W3, W4) consignées dans au moins un enregistreur secondaire de données (9, 10, 11).

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• CH 667328 A5